# EUROPEAN PATENT APPLICATION

(11) **EP 4 741 749 A1**
(43) Date of publication of application: **13.05.2026**
(21) Application number: 24383228.4
(22) Date of filing: 11.11.2024
(51) Int. Cl.: F28D 1/053, H01M 10/613, H01M 10/625, H01M 10/643, H01M 10/6555, H01M 10/6557, F28F 9/02, F28F 1/02

(54) **CONNECTOR DEVICE**

(71) Applicant: BORGWARNER EMISSIONS SYSTEMS SPAIN, S.L.U., 36315 Vigo Pontevedra (ES)
(72) Inventor: HERMIDA, Xoan, 36380 Gondomar (ES); LOZANO, Francisco, 36400 O Porriño (ES); DÍAZ, Clara, 36208 Vigo (ES); LORENZO GONZÁLEZ, Manuel, 36413 O Porriño (ES); GALLEGO, Joaquín, 36205 Vigo (ES); MÉNDEZ CALVO, María Isabel, 36201 Vigo (ES)
(74) Representative: ABG Intellectual Property Law, S.L.

(57) **Abstract**

The present invention relates to a connector device suitable for connection between a heat exchange tube with a flat configuration and at least one conduit which can be a liquid coolant feed conduit, a liquid coolant return conduit, or both. The connector device is particularly suitable for heat exchange tubes for heat exchange with battery cells where the free spaces left by the cell cluster are filled with foam. Barrier means which are interposed between the outside of the connector and sealing means established in the attachment with the exchange tube are used in the connector. The barrier means prevent, or at least hinder, the entry of the foam used when manufacturing the battery while allowing the verification of the existence of leakages, for example, in quality control testing.

## Description

### OBJECT OF THE INVENTION

The present invention relates to a connector device suitable, and more preferably adapted, for connection between a heat exchange tube with a flat configuration and at least one conduit which can be a liquid coolant feed conduit, a liquid coolant return conduit, or both.

The connector device is particularly suitable for heat exchange tubes for heat exchange with battery cells where the free spaces left by the cell cluster are filled with foam.

Barrier means which are interposed between the outside of the connector and sealing means, which sealing means are established in the attachment with the exchange tube, are used in the connector. The barrier means prevent, or at least hinder, the entry of the foam used when manufacturing the battery while allowing the verification of the existence of leakages, for example, in quality control testing. Leakages can be identified through the behavior of the barrier means which allow the exit of the leaked fluid during quality control testing. The fluid used in quality control testing does not have to be the same fluid intended for heat exchange in the operating mode.

The invention is of interest in the current environmental measures aimed at the use of electric vehicles for reducing or eliminating greenhouse gas emissions.

### BACKGROUND OF THE INVENTION

One of the most extensively developed areas of technology relates to the automotive sector and mainly those technologies that implement electric engine drive to eliminate the emission of polluting gases and greenhouse gases.

The components of an electric vehicle subjected to the greatest research effort are the batteries, usually made up of cell clusters with a high degree of packing on which there is a need to control either an excessive temperature to prevent damage or a low temperature so that said batteries do not lose their capacity to store energy and maintain a certain potential.

To achieve this purpose, battery cells are distributed in packs that are as compact as possible, usually by intercalating flat heat exchange tubes between the cells. This is the most common case when the cells have a cylindrical configuration. In these cases, the most common configurations of the heat exchange tubes are flat and corrugated, such that this corrugation allows the shape of the tube to conform to each cell with which it is in contact in the largest possible outer side area, thereby favoring heat transfer by conduction between the cell and the heat exchange tube. These tubes extend, contacting an alignment of cells and leaving some cavities free.

Likewise, the tubes must be connected to one another so that all of them are fed with the liquid coolant and, after going through the inner channels of the tube, recover the return liquid completing a circuit that allows either evacuating heat from the cells when they are to be cooled or providing heat to the cells when they are to be heated.

These connections are located at the end of the tube, i.e., at either end or at both ends, or at an intermediate point. In the latter case, it is preferable to access the tubes from a direction perpendicular to the cell packing so as not to take up space that would reduce the number of cells in the battery.

In any case, the free cavities left by the cells and the heat exchange tubes are filled with a foam which, after being applied in liquid form, expands by means of a chemical reaction, filling said cavities. This foam is a protective foam and performs several functions, among which the following are identified:
- *Thermal insulation:* It helps to maintain a uniform temperature inside the battery pack, which is crucial for the performance and safety of the cells.
- *Physical protection:* It provides a layer of protection against impacts and vibrations, ensuring that the battery cells remain in place and are not damaged.
- *Noise reduction:* It acts as a buffer to reduce noise and vibrations that could be generated during vehicle operation.

Although this foam is a protective foam, its growth during expansion until it reaches its consolidation phase in the form of rigid foam is not always controlled. During the expansion phase, it can penetrate the fluidic connections causing damage to the fluidic heat exchange system. This is the case of the fluidic connectors that allow the feed and return connection of heat exchange tubes.

The problem to be solved is how to prevent the action of the foam by protecting the sealing means between the fluidic connector and the heat exchange tube such that the means that prevent said action of the foam do not interfere with the sealing tests between the connector and the tube that are required before installing the tube in the battery pack.

The described solution solves the aforementioned problem in an effective and feasible manner according to the examples that will be described.

### DESCRIPTION OF THE INVENTION

A first aspect of the invention relates to a device suitable for fluidic connection between a heat exchange tube preferably with a flat configuration and the conduit which provides liquid coolant or removes return liquid coolant.

The protection of the region where sealing is established between the conduit and the tube entails establishing means which prevent the entry of foam during the expansion phase. A complete block has the negative effect of also blocking the exit of fluid from the sealing means. During quality control testing to verify the absence of leakage in the sealing means, it is necessary to be able to observe the possible presence of leaked fluid. If the passage of any fluid is blocked, testing cannot be performed because information about leaked fluid is not available. This problem is solved by means of the connector according to the first inventive aspect.

The connector device, as indicated, is suitable for connection between a heat exchange tube with an essentially flat configuration and at least one conduit that is a feed conduit, or a return conduit, or both, for a liquid coolant, the tube showing one or more access openings, and comprises:
*a shell comprising*
   *at least one connection port located on the outside of the shell intended to establish a fluidic connection with the at least one conduit;*
   *at least one fluidic connection adapted to establish a fluidic connection with an access opening for accessing the heat exchange tube, wherein the fluidic connection is additionally in fluidic communication with the at least one connection port, and wherein*
      *the fluidic connection comprises a sealing means to establish sealing between the fluidic connection and the access opening for accessing the heat exchange tube;*
*it comprises barrier means to at least partially prevent the access of a foamed material from outside the shell to the sealing means, and wherein*
*the barrier means are adapted to allow the exit of fluid if the sealing means leak.*

The shell should be interpreted as a structural element, not necessarily forming a closed space, since the foam could invade an inner region, affecting the sealing, since there are no means that prevent it.

This shell comprises two fluidically interconnected elements, a connection port which is the one intended to be connected with the conduit which provides or removes the liquid coolant and a fluidic connection responsible for establishing the fluidic interface with the cooling tube in order to ensure the leak-tight entry and exit of the liquid coolant.

The fluidic connection with the cooling tube is by means of an opening which can be a through opening, with a single access through one of the sides of the tube, or even by means of an intermediate fluidic communication element such as a manifold which favors the attachment with the heat exchange tube. In the preferred examples, the opening of the exchange tube is located on one or more of the side walls thereof or on one or more side walls of an intermediate manifold if one is used.

In any of the cases, the connector has sealing means which ensure the leak-free attachment of the connector and the tube.

Additionally, the connector comprises barrier means which are interposed between the sealing means and the outside of the shell such that the means are the ones which confront any attempt of the foam to reach the sealing means, particularly during its phase of expansion. That is, it has been experimentally proven that the barrier means act at all times, even when the foam is introduced in liquid phase, ensuring the protection of the sealing means.

They are identified as barrier means because, in the event of the advancement of the foam, when the foam reaches the barrier means, they either completely prevent its passage or limit it such that in some cases the ability of the foam to minimally overcome same is allowed, but even in this case where the foam may come into contact with the sealing means, it would not affect the function of said means.

In turn, these barrier means are adapted to allow the exit of a fluid in the opposite direction, that is, a fluid used in a quality control test which verifies whether the sealing means perform their function would leak in the case of failure, and said leakage must be capable of overcoming the barrier means in order to identify the failure of the sealing means and to be able to adopt measures such as duly removing the connector and the connected tube so that they are not installed.

Embodiments of sealing means are O-rings or gaskets made of an elastomeric material that are pressed against the opening of the tube. According to a preferred embodiment, the sealing means are gaskets made of an elastomeric material which are subjected to a compressive force between a seat of the shell and the wall of the tube. This compressive force requires a support which absorbs the reaction forces. The retention support that the compressive force requires can be in a location away from the region where the sealing means are located.

In all the cases, the barrier establishes a surface which delimits a closure such that it leaves the sealing means therein. That is, any external fluid seeking a path from the outside to the sealing means must go through the barrier.

According to an embodiment applicable to all the described examples, *the fluidic connection is an inner connection located inside the shell.*

According to this embodiment, the shell defines an inner space, hence the fluidic connection is an inner connection. When the connection is an inner connection, there is a separation wall between the inside and the outside, for example, a wall of the shell enclosing the fluidic connection and the sealing means therein. The separation wall does not have to be leak-tight, and any opening, for example, between the shell and the tube, is a passage which allows the foam to invade the inner space and affect the sealing means.

In these cases, the barrier means can be located inside the shell as a more specific embodiment or even in the opening or openings leading to the external space.

According to an embodiment applicable to all the described examples, *the barrier means are a perimeter gasket comprising an elastically deformable lip, configured to be supported on a surface on which the passage barrier is established, the lip being arranged in an oblique manner to allow the easy exit of fluid and to hinder the entry of a foamed material.*

In this specific example, the barrier means use a perimeter gasket with a configuration which, according to a cross-section of the perimeter gasket, has an elastically deformable lip configured to be supported on a surface. This elastically deformable lip deforms depending on the forces to which it is subjected. In particular, it is configured to allow the easy exit of a fluid but to hinder the entry, and particularly of a foamed material.

A configuration which has been verified as highly effective is the configuration of a lip supported on the surface, but in an oblique position, with the end of the lip oriented outwards. An increase in external pressure, for example due to the action of the foam in its expansion phase, generates a force as a result which tends to cause the lip, and particularly its end, to press against the support surface with an even higher force, causing an increased closure the greater this action of pressure is.

In contrast, when the pressure comes from the inside, for example during a leak test, the pressure acts on the inner surface of the lip, and due to the inclination of the lip of the gasket, the resulting force tends to separate the lip from the support surface, causing the passage for the fluid to open.

With this configuration, the barrier is very efficient against foam expansion since the closure force still further wedges the action of the lip and allows the very low pressure exit of a test fluid in order to detect that the sealing means have failed.

According to an embodiment which is an alternative to the preceding example based on an elastically deformable lip, *the barrier means are a perimeter gasket comprising a porous material, wherein the pores are intercommunicated.*

According to this embodiment, the barrier means are a perimeter gasket comprising a porous material.

This description is applicable to all the examples described above wherein the barrier establishes a surface which delimits a closure such that it leaves the sealing means therein. That is, any external element seeking a path from the outside to the sealing means must go through the barrier.

In the case of the barrier formed by a porous material with intercommunicated pores, a fluid coming out of the sealing means as a result of a leakage in a quality control test will result in an exit of the fluid through the porous material. Not only does this allow the pores to be intercommunicated, but the high pressure of a test also favors its exit.

In contrast, it has been found that a porous material is an effective foam barrier. The foams commonly used have a high viscosity in liquid phase, making it almost impossible for them to penetrate a porous material, and when they start to solidify, this penetration possibility is zero or close to zero. That is, this low degree of penetration in liquid phase does not prevent its passage. In practice, it has been observed that the foam penetrates the porous material somewhat, and in the worst case scenario, goes through same only slightly but invading a minimal part of the inner space formed by the barrier of porous material, and without affecting the function of the sealing means.

According to this embodiment applicable to all the described examples in which the barrier means are formed by a porous material, *the porous material is elastically deformable.*

It has been found that, in this specific case, the porous material can be slightly compressed against the surface which it delimits given its elastically deformable behavior. A foam in the expansion phase exerting pressure on the barrier means may overcome said barrier if a separation occurs between the material of the barrier means and the wall of the tube on which it is supported. The characteristic of being an elastically deformable material provides a capacity to adapt to the shape of the surface of the tube, so there is established a passage barrier for the foam without openings or free spaces which establish a preferred path for the foam.

In this embodiment, the elastically deformable behavior allows establishing an initial compression pressure which generates a tendency to close any opening that can be produced due to the action of an external force such as the pressure exerted by the foam as it advances, seeking to occupy all the available cavities.

According to an embodiment applicable to the embodiments described above, the device comprises:
- *two connection ports, an inlet connection port and an outlet connection port;*
- *two fluidic connections, an outlet fluidic connection and an inlet fluidic connection;*
- *the inlet connection port is in fluidic communication with the inlet fluidic connection, and the outlet connection port is in fluidic communication with the outlet fluidic connection; and,*
- *the inlet fluidic connection is adapted to connect with an access opening for accessing the heat exchange tube for the entry of liquid coolant, and the outlet fluidic connection is adapted to connect with another access opening for accessing the heat exchange tube for the exit or return of the liquid coolant.*

This embodiment allows introducing the liquid coolant entering the heat exchange tube and receiving the return liquid coolant provided by the same cooling tube in the same device.

The device has two connection ports, one for connection with the conduit feeding the tube and the other for connection with the conduit receiving the return flow. Each port is in fluidic communication with the corresponding connection which is in turn connected to the heat exchange tube by means of sealing means that prevent leakages in this attachment.

These two leak-tight attachments are those which can be tested in a quality control experiment. According to a preferred example, each of the leak-tight attachments has its own barrier means, which allows establishing, for example, different barrier means to protect each of the sealing means.

Likewise, the barrier means can be common given that the connection is considered failed if one of the sealing means fails. Likewise, the sealing means are protected against an external injection of foam with a single barrier means.

According to a specific embodiment of that described above, *the shell comprises two coupleable parts, a first part and a second part, wherein:*
- *once the two parts are coupled, the heat exchange tube is interposed between both parts;*
- *the first part intended, in the operating mode, for introducing fluid into the tube, wherein the first part comprises the inlet connection port and the inlet fluidic connection;*
- *the second part intended, in the operating mode, for recovering the return fluid from the tube, wherein the second part comprises the outlet connection port and the outlet fluidic connection.*

According to this embodiment, the heat exchange tube is interposed between two parts forming the device. That is, from the structural viewpoint, the parts of the device are arranged on both sides of the tube forming a sandwich-type structure, although according to embodiments both parts may be in contact or even coupled.

According to a preferred mode of this embodiment formed by two parts, the attachment between the parts ensures a strong structure that serves as a support for the sealing means so as to ensure the compressive forces against the openings of the heat exchange tube. These compressive forces are, for example, those used in sealing gaskets or elastomeric gaskets which ensure sealing between the surfaces with which it is compressed.

This configuration allows preventing the need to establish a configuration on the tube which allows such attachments particularly configured to be attached to tube. This reduces the design requirements of the exchange tube, reducing costs and operation requirements during manufacture and installation.

A specific example of coupling between the two parts is by means of clipping between both parts.

Another specific example of coupling between the two parts is by means of a screwed attachment. A more specific example is by means of a screw that goes through the tube, or manifold if one is used, through a region of the tube that does not affect the sealing thereof, in order to attach both parts.

From the fluidic viewpoint, the heat exchange fluid enters through an inlet connection port and is directed to the fluidic connection located in the same part. The fluidic connection transfers the fluid to the through one of the openings. This configuration is particularly suitable for U-shaped configurations in which the fluid has an outbound segment and another inbound segment. The return flow enters the fluidic connection of the other part and is conducted to the outlet connection port.

According to one embodiment, the inlet opening is located on the same side of the tube as the outlet opening, and according to an alternative example, the inlet opening is located on the side opposite the outlet opening.

According to an embodiment applicable to all the examples described above, *the barrier means show a first support region on the shell and a second support configured to be supported on either the tube or the manifold if the connection with the tube is with the intermediation of a manifold, and to be coupled on the tube in the operating mode, the sealing means are housed in a space closed by the barrier means.*

In any of the examples described above, particularly with the use of a perimeter gasket comprising an elastically deformable lip or alternatively a perimeter gasket comprising a porous material, wherein the pores are intercommunicated, these elements barrier are interposed between two support surfaces, one support surface on the shell and another support surface formed by the exchange tube.

In this configuration, the distance between these surfaces is such that the barrier means are in contact between both and the barrier means delimit an inner space in which the sealing means are located. That is, in the event of a fluid leakage in a sealing test, the leaked fluid must necessarily overcome the barrier means, demonstrating the failure, and in the operating mode, the sealing means do not have any opening to the outside which exposes them to the direct action of the foam, mainly in the expansion phase. Direct action of the foam is interpreted as an action where the foam would access the sealing means through a given path without running into any element of the barrier means. This does not happen because any path connecting an external point to the connector device and the sealing means must go through the barrier means.

A second aspect of the invention relates to *a heat exchange tube comprising at least one connector device according to any of the examples described above.*

An embodiment of this tube and connector combination is the one which uses an embodiment of the connector such that it comprises a first part and a second part, the first part for introducing the fluid into the tube in the operating mode and the second part for recovering the return fluid from the tube in the operating mode. In this embodiment, the tube comprises a first group of channels for an outbound flow and a second group of inner channels for the return flow, these groups being communicated at one end of the tube or at the two ends of the tube.

When the tube has the two groups of inner channels communicated at one of the ends, an embodiment in which the two parts are located at the opposite end following the longitudinal direction of the tube is of interest. The first part is installed to feed the first group of inner channels, and the second part is installed to receive the flow from the second group of channels. According to this embodiment, the flow follows a U-shaped configuration.

When the tube has the two groups of inner channels communicated at both ends, an embodiment in which the two parts are located at an intermediate point of the tube following the longitudinal direction of the tube is of interest. The first part is installed to feed the first group of inner channels and the second part is installed to receive the flow from the second group of channels; wherein the flow introduced through the first part is distributed to both ends flowing through the first group of inner channels, transferred to both ends of the tube towards the second group of inner channels, and finally the flow converges towards the second part to exit as a return flow. In this case, the fluid follows a U-shaped configuration for each end of the tube.

When a first group of inner channels is described in these combinations, it should be interpreted as one or more inner channels, the same applies for the second group of inner channels.

A third aspect of the invention relates to *a battery comprising a plurality of cells and exchange tubes for regulating the temperature of the cells, wherein the heat exchange tubes are connected with a heat exchange liquid feeding and recovery means by a connector according to any of the described embodiments.*

A fourth aspect of the invention relates to a vehicle comprising at least one battery according to the third inventive aspect.

A fifth inventive aspect relates to a method of assembling a battery. The assembled battery comprises a plurality of cells and at least one heat exchange tube for the thermal regulation of the cells, wherein the method comprises the steps of:
- *coupling of least one connector device, according to any of the described embodiments, to an opening of either an exchange tube or a feed manifold of the tube if the tube has said manifold;*
- *carrying out a sealing verification test by means of the following sub-steps:*
   *subjecting the attachment between the connector device and the tube, or the manifold of the tube, if there is a manifold, to pressure, by pressurizing a verification fluid,*
   *verifying if the barrier means of the connector device show leakage of the verification fluid,*
- *if there is no leakage of the verification fluid through the barrier means, emptying the tube and the verification fluid connection device and incorporating the tube with the connector device in thermal contact with one or more cells configuring a battery cell pack housed in a shell, or if there is a leakage of verification fluid, disposing of the tube and connector device assembly by trying a new tube with its connector device;*
*introducing a foaming material into the shell with the cells and the at least one tube connected by means of the connector device and allowing the foam to expand therein.*

### DESCRIPTION OF THE DRAWINGS

These and other features and advantages of the invention will become more apparent based on the following detailed description of a preferred embodiment, given only by way of illustrative and non-limiting example, in reference to the attached figures.
- Figure 1: This figure schematically shows a front view of an embodiment of a heat exchange tube.
- Figure 2: This figure schematically shows a front view of another embodiment of a heat exchange tube.
- Figure 3: This figure schematically shows a front view of another embodiment of a heat exchange tube.
- Figure 4: This figure schematically shows a first embodiment of the connector device, in which the heat exchange tube is shown according to a cross-section and in which the plane of section also sections the connector device to visually access the inside thereof.
- Figure 5: This figure schematically shows a second embodiment of the connector device with the shell in two parts, in which the heat exchange tube is shown according to a cross-section and in which the plane of section also sections the connector device to visually access the inside thereof.
- Figure 6: This figure schematically shows barrier means formed by a perimeter gasket with an elastically deformable lip, the surface on which it is supported, and with a partial section to allow observing its configuration.

### DETAILED DESCRIPTION OF THE INVENTION

According to the first inventive aspect, the present invention relates to a connector device suitable for, and more specifically adapted to allow the connection of liquid coolant feed and return conduits with one or more heat exchange tubes from among the tubes arranged between the battery cells of a vehicle so as to ensure that they are at a suitable operating temperature.

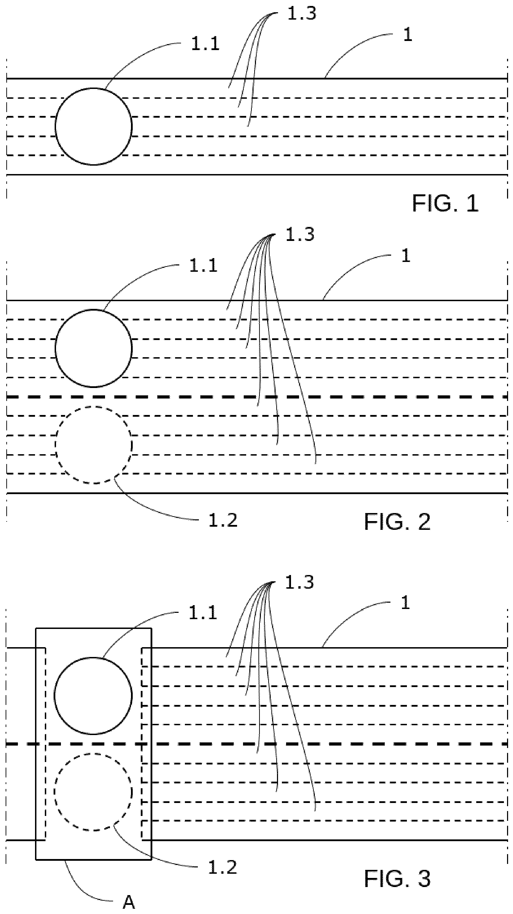

Considering Figure 1, this figure schematically shows a front view of an embodiment of a heat exchange tube (1).

The tube (1) shown has an essentially flat configuration, which means that its shape extends mainly in two dimensions although it can adopt a winding path in the longitudinal direction. Most commonly, this path is corrugated to allow establishing the largest area of contact possible with the cylindrical-shaped cells. Therefore, Figure 1 to 3, which are schematic examples, must be interpreted generally, understanding that what is important is its structure and that it can adopt this corrugated shape as an embodiment.

In the embodiment of Figure 1, the heat exchange tube (1) has an inner structure formed by a plurality of channels (1.3) arranged parallel to one another and extending longitudinally. This channel structure allows establishing a guided flow along the entire length of the tube (1) and allows, for example, the flow rate through the entire section of the tube (1) to be about the same.

For example, tubes of this type are manufactured by means of extrusion, for example in aluminum, and the corrugated shape is manufactured by stamping the extruded tube (1).

The left side of the figure shows a circle representing a non-through opening which provides access to all the inner channels of the heat exchange tube (1) through one of the faces of the tube (1). For example, a milling operation on one of the faces of the tube (1) allows removing the material of the disk forming the wall of the tube (1) and, by proceeding further with this milling operation, the material forming the separation wall between the inner channels (1.3) in this area would be removed to therefore form a chamber that performs the function of a manifold for the feeding or exit of the liquid coolant.

Other equivalent forms make a through perforation and delimit one of the faces, for example, by means of a part that ensures sealing so that a fluid entering or exiting through the opening (1.1) is transferred entirely to/from the inside of the inner channels (1.3) of the tube (1)

Figure 2 schematically shows a heat exchange tube (1) in which two groups of channels (1.3) have been distinguished, a first group of channels (1.3) shown in the top part and a second group of channels (1.3) shown in the bottom part and separated from the first group of channels (1.3) by the wall separating the two adjacent channels (1.3). This separation has been schematically depicted with a discontinuous line. Both this discontinuous line and the discontinuous lines defining the separation walls of the channels (1.3) identify that they are found on the inside, and therefore not parts that can be seen from the outside.

In this embodiment, one of the openings (1.1), the upper opening (1.1), is located on the visible side, and the other opening (1.2) is located on the other side of the heat exchange tube (1), hence it is also depicted in discontinuous lines.

This configuration allows having the entire space given by the height of the heat exchange tube (1). Height is understood as the orientation in the figure and it is therefore the width of the flat tube (1). The third dimension, other than the length and width of the tube (1), will be considered as the "thickness" of the heat exchange tube (1).

According to the configuration of the tube (1) shown in Figure 1, the flow is an outbound flow or an inbound flow, but not both at the same time. That is, the flow enters through the opening (1.1) and exits in another location of the tube (1) through another opening (1.2), or vice versa.

According to the configuration of the tube (1) shown in Figure 2, the same tube (1) can transport the outbound flow in one group of channels (1.3) and the return flow in another group of channels (1.3). In these cases, the tube (1) has at one end a manifold which allows transferring the fluid from the first group of channels (1.3) to the second group of channels (1.3) and is designated as a U-shaped flow.

Figure 3 schematically shows another embodiment of the heat exchange tube (1) wherein the introduction or extraction of the liquid coolant is performed through two manifolds (A) accessing the channels (1.3) through the end of the heat exchange tube (1). The advantage of this configuration is that it does not require machining operations on an extruded tube and the addition of additional parts, for example, two stamped metal sheets, is sufficient to configure the manifolds (A).

Although not depicted in Figures 1 to 3, this specific way of using an intermediate manifold is applicable to a tube such as the one of Figure 1 in which there is only an outbound or return flow.

Figure 3 also shows that to the left side of the manifolds (A) the heat exchange tube (1) is prolonged in the same manner as it to the right side, always using the terms right, left, up, and down to refer to the positions shown in the figures.

In this way, the manifold (A) may be located not only at the end of the heat exchange tube (1) but also at an intermediate point of the heat exchange tube, for example, at a central point according to the longitudinal direction. This allows the liquid coolant to be fed and removed at an intermediate point. The liquid coolant is transported to the two opposite ends of the heat exchange tube (1) through a group of channels (1.3) and, returns to the same intermediate point through the other group of channels (1.3). Notwithstanding the foregoing, the entry of the liquid coolant and the exit of the return flow of the liquid coolant can also be at different points according to the longitudinal direction.

It should be clarified that the longitudinal direction in all the cases described based on Figures 1 to 3 is the direction shown to be horizontal.

All the described tubes (1) are tubes (1) suitable for the described connector devices.

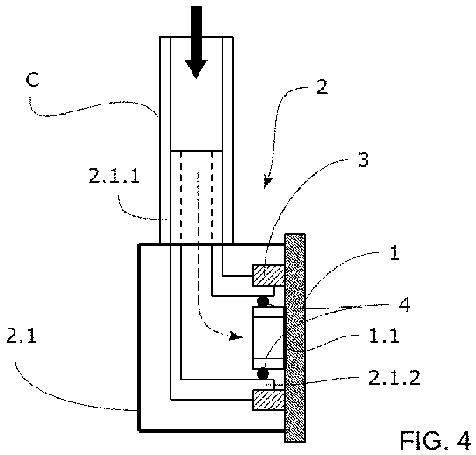

Figure 4 schematically shows a first embodiment of the connector device.

On the right side, a striped rectangle depicts the section of the heat exchange tube (1) with a flat configuration accessed through an opening (1.1) which, according to the orientation in the figure, is located on the face of the heat exchange tube (1) located on the left side. It is the opening (1.1) through which the heat exchange tube (1) in this embodiment will be fed.

The feed comes from a conduit (C) shown with a thick black arrow indicating the entry of the liquid coolant. The conduit (C) is connected to a connection port (2.1.1) in the form of a spigot or a tubular body which, in this embodiment, is inserted into the conduit (C).

The connection port (2.1.1) emerges from a shell (2) formed in this example by a part (2.1) and having a fluidic connection (2.1.2) intended for connection with the opening (1.1) of the heat exchange tube (1).

The fluidic connection (2.1.2) shows sealing means (4) intended for preventing leakages in the fluid transfer between an inner conduction of the shell (2) and the inside of the heat exchange tube (1).

The inner conduction of the shell (2) is schematically shown with a discontinuous arrow and this inner conduction is responsible for putting the connection port (2.1.1) and the fluidic connection (2.1.2) in fluidic communication. In this way, the fluid coming from the conduit (C) is transferred without leakage to the heat exchange tube (1).

The same Figure 4 shows the shell (2), and in this particular example the outer region of the inner conduction of the shell (2) with a seat on which the barrier means (3) are supported. In this embodiment, these barrier means (3) are formed by an annular part made of a porous material and supported both on the seat of the shell (2) and on the outer surface of the heat exchange tube (1) such that the sealing means are housed therein.

If the part (2.1) forming the shell (2), which is not leak-tight, allows the entry of foam during the assembly of the battery to protect its cells, this foam will not have direct access to the sealing means (4) since the barrier means (3) are interposed.

In contrast, if the sealing means fail in a quality control test to verify the sealing between the fluidic connection (2.1.2) and the heat exchange tube (1), the leaked fluid meets the barrier means (3) from the inside and the leaked fluid is capable of coming out through the porous material, demonstrating a failed sealing.

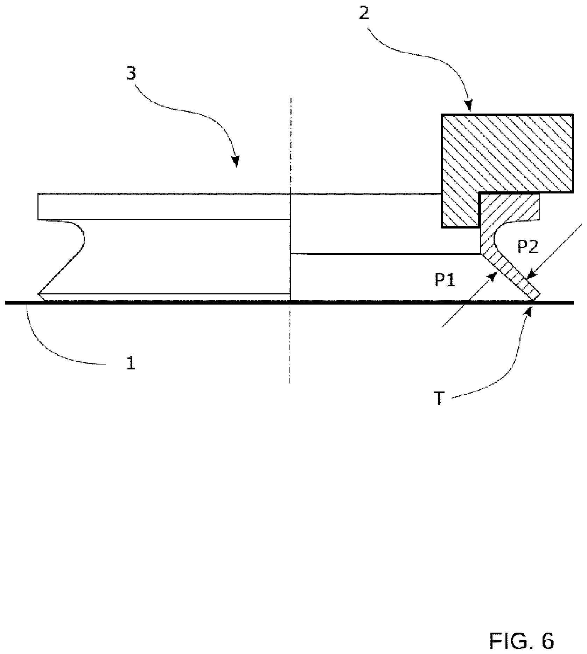

The same occurs when the barrier means (3) are formed by a perimeter gasket comprising an elastically deformable lip such as that shown in Figure 6 and will be described below.

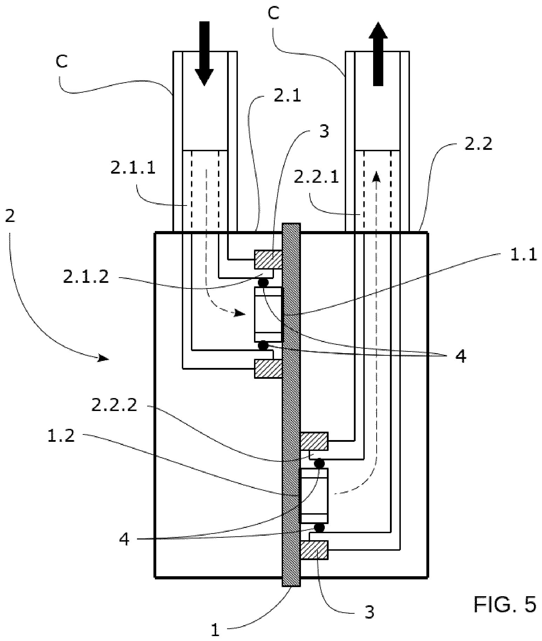

Figure 5 schematically shows another embodiment applicable to a tube (1), wherein one or more inner channels (1.3) are intended for an outbound flow and one or more inner channels (1.3) are intended for a return flow, as shown in Figures 2 and 3, for example.

In this embodiment, the shell (2) is formed by two parts, a first part (2.1) located on one side of the heat exchange tube (1), for example the left side as shown in the figure, and a second part (2.2) located on the other side of the heat exchange tube (1), now on the right side as shown in the figure.

In this embodiment, the opening (1.1) into which the liquid coolant is introduced is located in the top part and accessible from the left, always following the orientation shown in Figure 5 and, the exit of the liquid coolant through another opening (1.2) is located in the bottom part and accessible from the right.

In this way, the first part (2.1) of the shell (2) is located on one side of the tube (1) to provide liquid coolant to the tube (1) and the second part (2.2) of the shell (2) is located on the opposite side of the tube (1) to remove the return liquid coolant flow, as shown by the thick black arrows located in the feed and return conduits (C).

The first part (2.1) is as described in the embodiment shown in Figure 4, only now the size of the shell (2) is shown to be larger so as to match the size of the second part (2.2) located on the right side and must reach the lower position, now on the other side according to the direction indicated by the width of the heat exchange tube (1) or vertical direction according to the figure where the opening (1.2) for the return flow is located.

This second part (2.2) is also configured with a connection port (2.2.1) and a fluidic connection (2.2.2) intended for leak-tight connection on the second opening (1.2), the port (2.2.1), and the connection (2.2.2) fluidically communicated through an inner conduction which is now somewhat longer than that of the first part (2.1). The configuration of the sealing means (4) and the barrier means (3) are as described for the first part (2.1), so such descriptions also apply to this second part (2.2).

This opposing configuration, the first part (2.1) on one side of the heat exchange tube (1) with a flat configuration and the second part (2.2) on the other side of the heat exchange tube (1), allows both parts to be able to be mechanically linked to one another, leaving the heat exchange tube (1) interposed between them. This mechanical linkage, not visually shown in Figure 5, can be formed by a clipped attachment or a screwed attachment, only as examples of methods for establishing a mechanical linkage.

This configuration in which the two parts (2.1, 2.2) are attached to one another, leaving the exchange tube (1) located between them, allows the sealing means (4) and the barrier means (3) to exert force on the tube (1) or an intermediate manifold, if a manifold is used as described in Figure 3, in order to perform the respective function thereof given that the parts (2.1, 2.2) of the shell (2) serve as a support as a result of attachment with the opposite part.

This configuration also prevents the need to establish specific attachment means in the exchange tube (1), with it being sufficient for the two parts (2.1, 2.2) to be designed for attachment to one another leaving the tube (1) interposed.

This Figure 5 describes an embodiment in which the connection ports (2.1.1, 2.2.1) of the two parts (2.1, 2.2) are located on the same side considering the direction established by the width of the tube (1), that is, according to the vertical direction following the direction shown in Figure 5. However, an alternative example provides a connection port (2.1.1) oriented to one side according to the direction established by the width of the tube (1) and the other connection port (2.2.1) oriented in the opposite direction, also according to the direction established by the width of the tube (1).

These examples correspond to a tube (1) as shown in Figures 2 or 3 in which the inlet and outlet openings (1.1, 1.2) are located at the same point according to the longitudinal direction of the tube (1).

Any of the described examples in which there are two openings, an inlet opening (1.1) and an outlet opening (1.2), is also in accordance with an embodiment of the first inventive aspect when both openings (1.1, 1.2) are located at different points and spaced apart according to the longitudinal direction.

In Figure 5, the two parts (2.1, 2.2) are located on different faces of the tube (1), that is, they are shown on the left and right sides. Alternatively, the inlet and outlet openings (1.1, 1.2) are located on the same side or face of the tube (1), for example, in an orientation of the tube (1) as shown in Figure 5, they will be located on either the left side or the right side. In this case, the openings (1.1, 1.2) will preferably be located at different points and spaced apart according to the longitudinal direction as indicated in the preceding paragraph.

Figure 6 schematically shows the structure of the barrier means formed by a perimeter gasket comprising an elastically deformable lip. In this example, the perimeter gasket follows a circular path, although it can follow a path, for example, a closed path, adapted to the enclosure to be protected with the barrier means (3).

Figure 6 shows, on the left side, the half of the perimeter gasket that is not sectioned and, on the right side, the half sectioned according to a plane parallel to the plane of the paper on which it is depicted.

The right-side section only depicts a segment of the part of the shell (2) which provides a seat, in this case a staggered seat, with a first striped portion, and the section of the perimeter gasket which shows an oblique lip supported at a point (T) or contact region, which point, according to the section, is located on a surface on which a barrier is established, in this case the surface is the outer surface of the heat exchange tube (1).

The oblique lip shows an inclination such that its root is located inwardly towards the inner part to be protected, and its end edge, the one supported on the surface on which the closure is established, the heat exchange tube (1), is located in the outermost part.

With this configuration, an external pressure P2, exerted by the foam from the outer side during its expansion phase, for example, tends to exert a force on the support surface, favoring a force on the same upper surface, and therefore increasing the capacity for closing or even sealing the attachment.

In contrast, a pressure P1 exerted from the inside, which would be the case of an overpressure due to the leakage of fluid in a sealing test, would cause a force that would tend to lead to the bending of the lip, separating from the surface on which it is supported, allowing the release of the fluid.

## Claims

1. A connector device suitable for connection between a heat exchange tube (1) with an essentially flat configuration and at least one conduit (C) that is a feed conduit, or a return conduit, or both, for a liquid coolant, the tube (1) showing one or more access openings (1.1, 1.2), wherein
the device comprises a shell (2) comprising
at least one connection port (2.1.1, 2.2.1) located on the outside of the shell (2) intended to establish a fluidic connection with the at least one conduit (C);
at least one fluidic connection (2.1.2, 2.2.2) adapted to establish a fluidic connection with an access opening (1.1, 1.2) for accessing the heat exchange tube (1), wherein the fluidic connection (2.1.2, 2.2.2) is additionally in fluidic communication with the at least one connection port (2.1.1, 2.2.1), and wherein the fluidic connection (2.1.2, 2.2.2) comprises a sealing means (4) to establish sealing between the fluidic connection (2.1.2, 2.2.2) and the access opening (1,1, 1.2) for accessing the heat exchange tube (1);
**characterized in that**
it comprises barrier means (3) to at least partially prevent the access of a foamed material from outside the shell (2) to the sealing means (4), and wherein
the barrier means (3) are adapted to allow the exit of fluid if the sealing means (4) leak.

2. The device according to claim 1, wherein the fluidic connection (2.1.2, 2.2.2) is an inner connection located inside the shell (2).

3. The device according to claim 1 or 2, wherein the barrier means (3) are a perimeter gasket comprising an elastically deformable lip, configured to be supported on a surface on which the passage barrier is established, the lip being arranged in an oblique manner to allow the easy exit of fluid and to hinder the entry of a foamed material.

4. The device according to any of claims 1 to 2, wherein the barrier means (3) are a perimeter gasket comprising a porous material, wherein the pores are intercommunicated.

5. The device according to claim 4, wherein the porous material is elastically deformable.

6. The device according to any of the preceding claims, comprising:
- two connection ports (2.1.1, 2.2.1), an inlet connection port (2.1.1) and an outlet connection port (2.2.1);
- two fluidic connections (2.1.2, 2.2.2), an outlet fluidic connection (2.2.2) and an inlet fluidic connection (2.1.2);
- the inlet connection port (2.1.1) is in fluidic communication with the inlet fluidic connection (2.1.2), and the outlet connection port (2.2.1) is in fluidic communication with the outlet fluidic connection (2.2.2); and
- the inlet fluidic connection (2.1.2) is adapted to connect with an access opening (1.1) for accessing the heat exchange tube (1) for the entry of liquid coolant, and the outlet fluidic connection (2.2.2) is adapted to connect with another access opening (1.2) for accessing the heat exchange tube (1) for the exit or return of the liquid coolant.

7. The device according to the preceding claim, wherein the shell (2) comprises two coupleable parts (2.1, 2.2), a first part (2.1) and a second part (2.2), wherein:
- once the two parts (2.1, 2.2) are coupled, the heat exchange tube (1) is interposed between both parts (2.1) and (2.2);
- the first part (2.1) intended, in the operating mode, for introducing fluid into the tube (1), wherein the first part (2.1) comprises the inlet connection port (2.1.1) and the inlet fluidic connection (2.1.2);
- the second part (2.2) intended, in the operating mode, for recovering the return fluid from the tube (1), wherein the second part (2.2) comprises the outlet connection port (2.2.1) and the outlet fluidic connection (2.2.2).

8. The device according to any of the preceding claims, wherein the barrier means (3) show a first support region on the shell (2) and a second support configured to be supported on either the tube (1) or the manifold (A) if the connection with the tube (1) is with the intermediation of a manifold (A), and to be coupled on the tube (1) in the operating mode, the sealing means (4) are housed in a space closed by the barrier means (3).

9. A heat exchange tube (1) comprising at least one connector device according to any of the preceding claims.

10. The heat exchange tube (1) according to the preceding claim with the connector device according to claim 7, wherein
- a first part (2.1) of the connector device is in fluidic communication with one or more inner channels (1.3) of the tube (1) to feed an outbound flow;
- a second part (2.2) of the connector device is in fluidic communication with one or more inner channels of the tube (1) to receive the return flow;
- the first part (2.1) and the second part (2.2) of the connector device are at one end of the tube (1) according to a longitudinal direction, and at the opposite end of the tube (1), the one or more inner channels for the outbound flow are in fluidic communication with the one or more channels for the return flow to configure a U-shaped flow.

11. The heat exchange tube (1) according to the preceding claim with the connector device according to claim 7, wherein
- a first part (2.1) of the connector device is in fluidic communication with one or more inner channels (1.3) of the tube (1) to feed an outbound flow;
- a second part (2.2) of the connector device is in fluidic communication with one or more inner channels of the tube (1) to receive the return flow;
- the first part (2.1) and the second part (2.2) of the connector device are in an intermediate position of the tube (1) according to a longitudinal direction, and at both ends of the tube (1), the one or more inner channels for the outbound flow are in fluidic communication with the one or more channels for the return flow to configure two U-shaped flows.

12. The heat exchange tube according to claim 10 or 11, wherein the inlet fluidic connection (2.1.2) and the outlet fluidic connection (2.2.2) are oriented towards the same side, according to the direction transverse to the tube (1) such that it is parallel to the dimension establishing the width of the tube (1).

13. A battery comprising a plurality of cells and exchange tubes (1) for regulating the temperature of the cells, particularly tubes according to claims 9 to 12, wherein the heat exchange tubes (1) are connected with a heat exchange liquid feeding and recovery means by a connector according to any of claims 1 to 8.

14. A vehicle comprising at least one battery according to claim 13.

15. A method of assembling a battery comprising a plurality of cells and at least one heat exchange tube (1) for the thermal regulation of the cells, wherein the method comprises the steps of:
- coupling at least one connector device according to any of claims 1 to 8 to an opening (1.1, 1.2) of either an exchange tube (1) or a feed manifold (A) of the tube (1) if the tube (1) has said manifold (A);
- carrying out a sealing verification test by means of the following sub-steps:
subjecting the attachment between the connector device and the tube (1), or the manifold (A) of the tube (1), if there is a manifold (A), to pressure with a verification fluid,
verifying if the barrier means (3) of the connector device show leakage of the verification fluid,
- if there is no leakage of the verification fluid through the barrier means (3), emptying the tube (1) and the verification fluid connection device and incorporating the tube (1) with the connector device in thermal contact with one or more cells configuring a battery cell pack housed in a shell, or if there is a leakage of verification fluid, disposing of the tube (1) and connector device assembly by trying a new tube (1) with its connector device;
- introducing a foaming material into the shell with the cells and the at least one tube (1) connected by means of the connector device and allowing the foam to expand therein.
